# EUROPEAN PATENT APPLICATION

(11) **EP 4 631 854 A1**
(43) Date of publication of application: **15.10.2025**
(21) Application number: 24425012.2
(22) Date of filing: 08.04.2024
(51) Int. Cl.: B64C 27/04, B64C 27/14, B64D 27/14, B64D 41/00

(54) **AIRCRAFT AND RELATIVE CONTROL METHOD**

(71) Applicant: Leonardo S.p.A., 00195 Roma (IT)
(72) Inventor: MARTINELLI, Giovanni, 27017 Samarate (VA) (IT); RAINERO, Marco, 27017 Samarate (VA) (IT); COGLIATI, Andrea, 27017 Samarate (VA) (IT); PIRRELLO, Riccardo, 27017 Samarate (VA) (IT)
(74) Representative: Studio Torta S.p.A.

(57) **Abstract**

An aircraft (1) is described comprising a motor member (2) which can be operated to power a first load with mechanical power; a second auxiliary load (9); a distribution system (10) electrically connected with the auxiliary load (9) so as to power it with a first electrical power value; a first electric machine (11) which can be operated as an electric generator to convert mechanical power into electrical power or as an electric motor to convert electrical power into mechanical power, and interposed between the motor member (2) and the distribution system (10); the aircraft (1) further comprises a first electrically rechargeable accumulator (20) electrically connected to the electric machine (11) acting as an electric motor to power it with a first electrical power sufficient to cause the motor member (2) to power up, when the motor member (2) is, in use, deactivated.

## Description

The present invention relates to an aircraft, in particular an aircraft capable of hovering, such as a tilt-rotor aircraft or a helicopter.

The present invention also relates to a method for controlling the aircraft.

In more detail, the known type of helicopters comprise:
- a fuselage;
- a main rotor adapted to provide the lift necessary to sustain the helicopter in flight and to allow the movement of the helicopter itself along a longitudinal and transverse direction; and
- a tail rotor adapted to counteract the rotational torque imparted by the main rotor to the fuselage and to control the yaw angle of the helicopter itself.

The known type of helicopters further comprise:
- one or more turbines;
- a main drivetrain operated by the turbines and adapted to drag the main rotor in rotation; and
- an auxiliary drivetrain which takes the motion from the main drivetrain and transmits it to the main rotor.

The known type of helicopters also comprise:
- an electrical distribution system adapted to power the auxiliary loads of the helicopter with electricity, such as heating, air conditioning and ventilation systems;
- one or more first electric machines mechanically connected to respective turbines and electrically connected to the electrical distribution system; and
- an auxiliary power unit electrically connected to the electrical distribution systems.

In the known type of solutions, the auxiliary power unit is a gas turbine, i.e., a power machine of thermal type.

The auxiliary power unit is adapted to provide a first mechanical power value needed to start up the turbines, when the helicopter is on the ground on a pad.

In more detail, the auxiliary power unit supplies mechanical power to an electric generator, which supplies electrical power to the electrical distribution system. The electrical distribution system, in turn, provides electrical power to the electric machines acting as electric motors which supply sufficient mechanical power to the turbines to cause them to power up.

The auxiliary power unit is also adapted to power the auxiliary loads, by means of the electric generator and the electrical distribution system, with a second electrical power value lower than the first value. This occurs if the turbines are not active, for example with the helicopter on the pad, or in the event of failure of the electric machines acting as electric generators, so as to allow the correct operation thereof during the flight of the helicopter.

During the normal operation of the turbines, the electric machines operate as electric generators, so as to supply electrical power to the electrical distribution systems and allow the correct operation of the auxiliary loads.

The need is felt in the field to reduce helicopter emissions of pollutant gases, in particular as regards carbon dioxide and nitrogen oxides, without creating additional burdens for helicopter construction and/or certification and without penalising the performance of the helicopters themselves.

US-B-10,213,296 and US-B-10,766,629 describe a helicopter comprising:
- a hybrid motor, which can be placed in a stand-by configuration during a stable flight condition of the helicopter itself; and
- an auxiliary power unit of thermal type adapted to power a rapid restart system of the hybrid motor.

US-B-6,642,881 describes a conventional-type helicopter with an auxiliary power unit provided with a plurality of electric starter batteries.

The aim of the present invention is to make an aircraft, which allows to satisfy, in a simple and economic way, the requirement specified above.

The aforesaid aim is achieved by the present invention, as it relates to an aircraft, as defined in claim 1.

The present invention relates to a control method of the aircraft, as defined by claim 8.

In order to better understand the present invention a preferred embodiment is described hereinafter, by way of a non-limiting example with reference to the accompanying drawings, wherein:
- figure 1 is a perspective view of a helicopter made according to the dictates of the present invention; and
- figure 2 is a schematic view of a propulsion unit of the helicopter of figure 1.

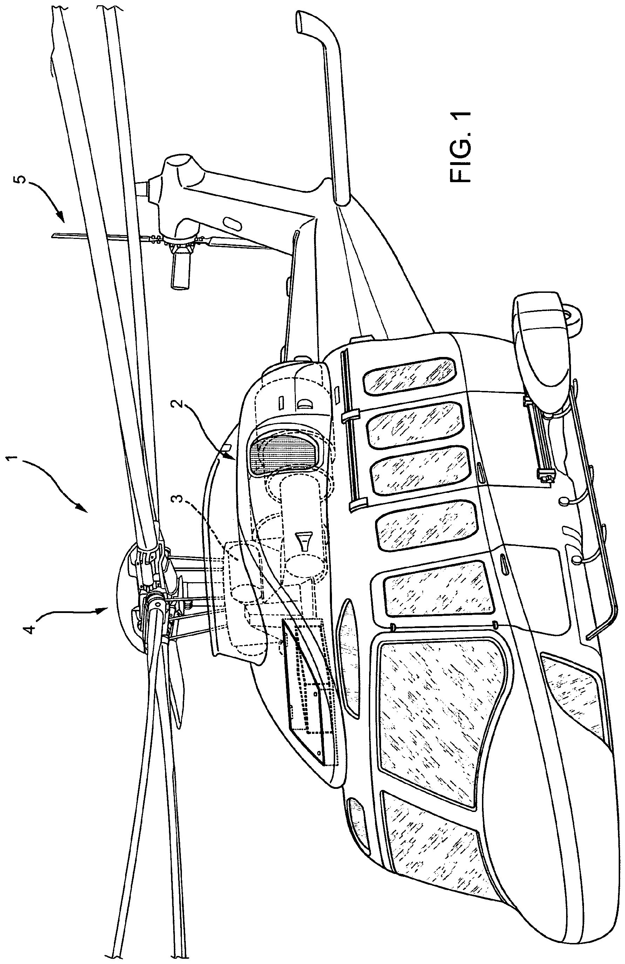

With reference to figures 1, the number 1 indicates an aircraft capable of hovering, in particular a helicopter.

The helicopter 1 essentially comprises:
- a pair of turbines 2;
- a main rotor 4;
- a tail rotor 5; and
- a primary drivetrain assembly 3, which is adapted to transmit motion from the turbines 2 to the main rotor 4 and to the tail rotor 5.

The helicopter 1 further comprises a plurality of secondary drivetrain assemblies, which are adapted to transmit the motion from the primary drivetrain assembly 3 to respective accessory devices, known per se and not illustrated, viz., intended, for example, to supply the energy necessary for the operation of respective on-board equipment.

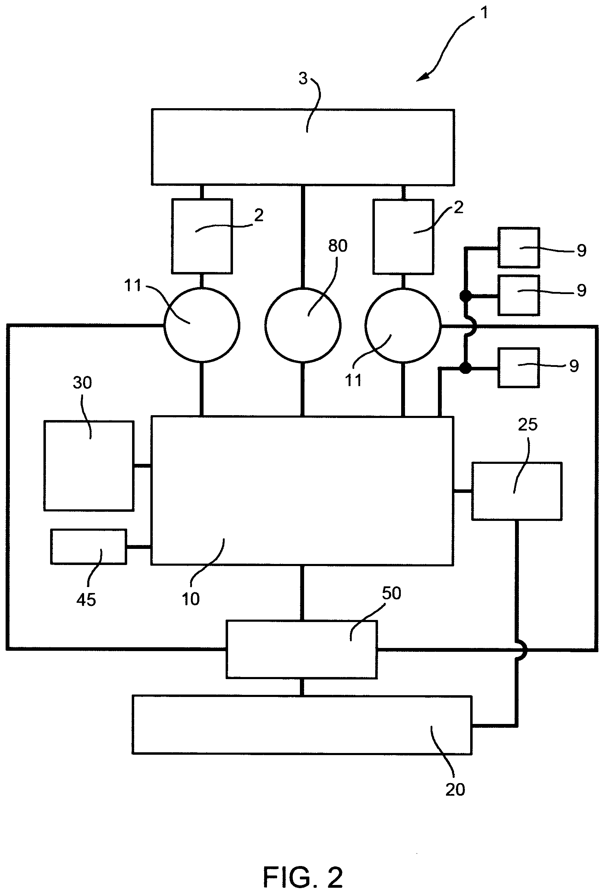

With reference to figure 2, the helicopter 1 further comprises:
- a plurality of auxiliary loads 9, such as heating, air conditioning and ventilation systems;
- an electricity distribution system 10 designed to power the auxiliary loads 9 of the helicopter 1 with a first electrical power value; and
- a pair of electric machines 11.

The electric machines 11 selectively act as:
- electric generators, which convert mechanical power into electrical power; or as
- electric motors, which convert electrical power into mechanical power.

The electric machines 11 are each interposed between respective turbines 2 and the distribution system 10.

In more detail, when they operate as electric generators, the electric machines 11 are powered with mechanical power by the respective turbines 2 and power the distribution system 10 with electrical power.

In contrast, when operating as electric motors, the electric machines 11 are powered with electrical power from the distribution system 10 and make mechanical power available to the respective turbines 2. This allows, when powering up, to provide the necessary starting torques to ensure the operation of the turbines 2.

In the case illustrated, the electric machines 11 operate on alternating current and voltage.

Advantageously, the helicopter 1 comprises an electrically rechargeable accumulator 20 electrically connected with the electric machines 11 acting as electric motors to power them with a second electrical power value greater than the first electrical power value and sufficient to cause the turbines 2 to power up, when the latter are deactivated.

The helicopter 1 further comprises a charger 25 electrically connected to the accumulator 20 and the distribution system 10.

The charger 25 is configured to be charged by the distribution system 10 with electrical power and power the accumulator 20 with the same electrical power.

The helicopter 1 further comprises a rechargeable electric accumulator 30 which is directly electrically connected to the distribution system 10.

The accumulator 30 is intended to assist the accumulator 20 during the start-up phases of the turbines 2 and/or powering the auxiliary loads 9, when the turbines 2 are deactivated with the helicopter 1 on the ground on the pad.

In particular, the accumulator 20 and the accumulator 30 have a first voltage and a second voltage, respectively. The first voltage is greater than the second tension.

The first voltage is greater than 200 V and is equal to 270 V in the case illustrated.

The second voltage is less than 100 V and is 28 V in the case illustrated.

The accumulators 20, 30 also have the first and the second direct voltage.

The accumulators 20, 30 are, in particular, Lithium-ion accumulators.

The helicopter 1 also comprises:
- a socket 45 electrically connectable with an external source of electrical power when the helicopter 1 is on the ground; and
- an electric conversion unit 50 electrically connected to the accumulator 20, the electric machines 11 and the distribution system 10.

The unit 50 is adapted to convert the direct electrical power supplied by the accumulators 20, 30 into alternating electrical power usable by the electric machines 11.

The helicopter 1 lastly comprises an electric generator 80 interposed between the drivetrain assembly 3 and the distribution system 10.

The operation of the helicopter 1 is described below starting from a condition in which the turbines 2 are deactivated and the helicopter 1 is on the ground.

In such a condition, the accumulator 30 supplies the first electrical power value to the distribution system 10, which electrically powers the auxiliary loads 9.

It is thus possible to ensure the operation of the heating, air conditioning and ventilation systems even when the turbines 2 are deactivated.

The accumulator 30 preferably powers the distribution system 50 with electrical power, so as to assist the accumulator 20 and to conserve part of the electrical power stored in the accumulator 30 to allow the turbines 2 to be powered on.

If it is necessary to drive the turbines 2, the accumulator 20 provides the second electrical power value required by the electric machines 11 acting as electric motors.

In particular, the accumulator 20 provides direct electrical power.

The unit 50 transforms the direct electrical power supplied by the accumulator 20 into alternating electrical power, which can be made available to the electric machines 11.

In more detail, the electric machines 11 convert the second electrical power value supplied by the accumulator 20 into the second mechanical power value which, made available to the turbines 2, allows the powering up thereof.

The turbines 2 operate the main rotor 4 and the tail rotor 5 by means of the drivetrain assembly 3, thus enabling the movement of the helicopter 1.

At this point, the electric machines 11 acting as electric generators convert an aliquot of the mechanical power generated by the turbines 2 into the first electrical power value which is made available to the distribution system 10.

The distribution system 10 supplies a first aliquot of such a first electrical power value to the auxiliary loads 9, thus enabling the operation of for example the heating, air conditioning and ventilation systems.

Furthermore, the distribution system 10 supplies a second aliquot of such a first electrical power value to the charger 25, thus enabling the accumulator 20 to be electrically charged.

The drivetrain assembly 3 further supplies an aliquot of the mechanical power generated by the turbines 2 to the generator 80.

The generator 80 converts such an aliquot of the mechanical power into the first electrical power value made available to the distribution system 10.

In the event of failure of the electric machines 11, the distribution system 10 supplies a first aliquot of such a first electrical power value to the auxiliary loads 9, thus enabling the operation of for example the heating, air conditioning and ventilation systems.

In other words, in the event of failure of the electric machines 11, the generator 80 supplies the first electrical power value to the distribution system 10, allowing the auxiliary loads 9 to operate.

Preferably, the accumulator 20 also contributes to the supply of such a first electrical power value to the distribution system 10.

Furthermore, the distribution system 10 supplies a second aliquot of such a first electrical power value to the charger 25, thus enabling the accumulator 20 to be electrically charged.

In the event of failure of the electric machines 11, the generator 80 and the accumulator 20, the accumulator 30 provides electrical power only to the auxiliary loads 9 essential for the survival of the helicopter 1 such as, for example, the communication and navigation systems.

From an examination of the helicopter 1 and the method carried out according to the dictates of the present invention, the advantages it allows to obtain are evident.

In particular, the helicopter 1 comprises the electrically rechargeable accumulator 20 electrically connected to the electric machines 11 acting as electric motors to power them with the second electrical power value sufficient to determine the powering on of the turbines 2.

In other words, the helicopter 1 no longer requires an auxiliary power unit of the thermal type to start the turbines 2, contrary to the known type of solutions commented on in the introductory part of the present description.

It is thus possible to drastically reduce the emission of polluting gases of the helicopter 1, especially carbon dioxide and nitrogen oxides.

This is achieved without affecting the certification of the helicopter 1, as the accumulator 20 preferably operates to start the turbines 2 when the helicopter 1 is not in flight.

Moreover, the performance of the helicopter 1 is substantially unchanged, as the accumulator 20 is capable of ensuring a number of powering ons, six in particular, of the turbines 2 completely identical to those of the traditional solutions commented on in the introductory part of the present description.

Furthermore, the helicopter 1 is of reduced weight with respect to the known type of solutions described in the introductory part of the present description, due to the fact that the accumulators 20, 30 and the charger 25 weigh less than the conventional auxiliary power unit and the relative starter unit.

Even further, the space normally allocated to housing the conventional auxiliary power unit is available for further equipment.

The maintenance of the accumulators 20, 30 and the charger 25 is particularly simple, as it is sufficient to remove such components from the distribution system 10 without having to provide a special controlled maintenance programme as is the case with the known type of auxiliary power units described in the introductory part of the present description.

Due to the fact that they are lithium-ion, the accumulators 20, 30 can also operate at particularly low temperatures, for example negative twenty degrees Celsius.

Finally, in the event of failure of the electric machines 11, the generator 80 and the accumulator 20 supply the first electrical power value to the distribution system 10, enabling the operation of the auxiliary loads 9.

This thus raises the degree of redundancy with respect to the known type of solutions described in the introductory part of the present description, which relied on the auxiliary power unit alone.

It is finally clear that modifications and variations may be made to the aircraft 1 and method described and shown herein, without departing from the scope of protection defined by the claims.

In particular, the aircraft 1 could be a tilt-rotor aircraft.

The helicopter 1 could also comprise a single turbine 2 and a single electric machine 11 interposed between the single turbine 2 and the distribution system 10.

## Claims

1. Aircraft (1) comprising:
- at least one motor member (2) which can be operated to power a first load (3) with mechanical power;
- at least a second auxiliary load (9);
- a distribution system (10) electrically connected with said auxiliary load (9), so as to power it with a first electrical power value; and
- at least a first electric machine (11) which can be operated as an electric generator to convert mechanical power into electrical power or as an electric motor to convert electrical power into mechanical power, and interposed between said motor member (2) and said distribution system (10);
**characterised in that** it comprises a first electrically rechargeable accumulator (20) electrically connected to said electric machine (11) acting, in use, as an electric motor to power it with a second electrical power value sufficient to cause, in use, said motor member (2) to power on, when said motor member (2) is, in use, deactivated.

2. Aircraft according to claim 1, **characterised in that** it comprises a charger (25) electrically connected with said first electric accumulator (20) to power it with electrical power, and with said distribution system (10) to be powered with electrical power.

3. Aircraft according to claim 1 or 2, **characterised in that** it comprises a second electrically rechargeable accumulator (30) directly electrically connected to said distribution system (10);
said first and second accumulators (20, 30) having a first and a second electrical voltage, respectively; said second voltage being greater than said first voltage.

4. Aircraft according to any one of the preceding claims, **characterised in that** at least one of said first and second electric accumulators (20, 30) is Lithium-ion.

5. Aircraft according to claim 3 or 4, **characterised in that** said first electric accumulator (20) has a voltage greater than 200 volts; and/or **characterised in that** said second electrical accumulator (30) has a voltage less than 100 volts.

6. Aircraft according to any one of the preceding claims, **characterised in that** said second electrical power value is greater than said first electrical power value.

7. Aircraft according to any one of the preceding claims, of the type capable of hovering, in particular a helicopter (1) or a tilt-rotor aircraft, **characterised in that** it comprises:
- a rotor (4) operatively connected to said motor member (2) and adapted to provide the lift required to sustain said helicopter (1);
- a drivetrain assembly (3) mechanically interposed between said motor member (2) and said rotor (4);
- a second electric machine (80) which can be operated as an electric generator to convert mechanical power into electrical power;
said second electric machine (80) being operatively connected with said drivetrain assembly (3) and with said distribution system (10).

8. Method for controlling an aircraft, comprising the steps of:
i) powering a first load (3, 4) with mechanical power by means of a motor member (2);
ii) powering a second auxiliary load (9) with a first electrical power value by means of an electrical distribution system (10); and
iii) selectively operating a first electric machine (11) as an electric generator to convert mechanical power into electrical power or as an electric motor to convert electrical power into mechanical power, said electric machine (11) being interposed between said motor member (2) and said distribution system (10);
**characterised in that** it comprises the step iv) of connecting a first rechargeable electric accumulator (20) with said electric machine (11) acting as an electric motor to power it with a second electrical power value sufficient to cause said motor member (2) to power up, when said motor member (2) is deactivated.

9. Control method according to claim 8, **characterised in that** it comprises the step v) of electrically connecting a charger (25) with said first accumulator (20) and said electrical distribution system (10) .

10. Control method according to claim 8 or 9, **characterised in that** it comprises the step vi) of electrically directly connecting a second accumulator (30) with said distribution system (10);
said first and second accumulators (20, 30) having a first and a second electrical voltage, respectively; said second electrical voltage being greater than said first electrical voltage.

11. Method according to any one of claims 8 to 10, **characterised in that** it comprises the further steps of:
vii) interposing a drivetrain assembly (3) between said motor member (2) and a rotor (4, 5) of a helicopter (1) adapted to provide the lift necessary to sustain the helicopter (1);
ix) operating a second electric machine (80) by means of said drivetrain assembly (3) and as an electric generator to convert mechanical power into electrical power; and
x) electrically connecting said second electric machine (80) with said drivetrain assembly (3), so as to supply electrical power to said electrical distribution system (10) and to said auxiliary load (9), in the event of failure of said first electric machine (11).

## Amended claims

### Amended claims in accordance with Rule 137(2) EPC.

1. Aircraft (1) comprising:
- at least one motor member (2) which can be operated to power a first load (3) with mechanical power;
- at least a second auxiliary load (9);
- a distribution system (10) electrically connected with said auxiliary load (9), so as to power it with a first electrical power value;
- at least a first electric machine (11) which can be operated as an electric generator to convert mechanical power into electrical power or as an electric motor to convert electrical power into mechanical power, and interposed between said motor member (2) and said distribution system (10); and
- a first electrically rechargeable accumulator (20) electrically connected to said electric machine (11) acting, in use, as an electric motor to power it with a second electrical power value sufficient to cause, in use, said motor member (2) to power on, when said motor member (2) is, in use, deactivated;
**characterized in that** said first accumulator (20) has a first electrical voltage and is Lithium-ion;
said first electric accumulator (20) having a voltage greater than 200 volts;
said electric machine (11) acting as an electric generator to convert an aliquot of the mechanical power generated by said motor member (3) into said first electrical power value which is made available to the distribution system (10), during the movement of said aircraft (1).

2. Aircraft according to claim 1, **characterised in that** it comprises a charger (25) electrically connected with said first electric accumulator (20) to power it with electrical power, and with said distribution system (10) to be powered with electrical power.

3. Aircraft according to claim 1 or 2, **characterised in that** it comprises a second electrically rechargeable accumulator (30) directly electrically connected to said distribution system (10);
said second accumulator (30) having a second electrical voltage; said first voltage being greater than said second voltage.

4. Aircraft according to claim 3, **characterised in that** said second electric accumulators (30) is Lithium-ion.

5. Aircraft according to claim 3 or 4, r **characterised in that** said second electrical accumulator (30) has a voltage less than 100 volts.

6. Aircraft according to any one of the preceding claims, **characterised in that** said second electrical power value is greater than said first electrical power value.

7. Aircraft according to any one of the preceding claims, of the type capable of hovering, in particular a helicopter (1) or a tilt-rotor aircraft, **characterised in that** it comprises:
- a rotor (4) operatively connected to said motor member (2) and adapted to provide the lift required to sustain said helicopter (1);
- a drivetrain assembly (3) mechanically interposed between said motor member (2) and said rotor (4);
- a second electric machine (80) which can be operated as an electric generator to convert mechanical power into electrical power;
said second electric machine (80) being operatively connected with said drivetrain assembly (3) and with said distribution system (10).

8. Method for controlling an aircraft, comprising the steps of:
i) powering a first load (3, 4) with mechanical power by means of a motor member (2);
ii) powering a second auxiliary load (9) with a first electrical power value by means of an electrical distribution system (10);
iii) selectively operating a first electric machine (11) as an electric generator to convert mechanical power into electrical power or as an electric motor to convert electrical power into mechanical power, said electric machine (11) being interposed between said motor member (2) and said distribution system (10);
iv) connecting a first rechargeable electric accumulator (20) with said electric machine (11) acting as an electric motor to power it with a second electrical power value sufficient to cause said motor member (2) to power up, when said motor member (2) is deactivated;
**characterized by** comprising the step v) of acting said electric machine (11) as an electric generator to convert an aliquot of the mechanical power generated by said motor member (3) into said first electrical power value which is made available to the distribution system (10), during the movement of said aircraft (1);
said first accumulator (20) having a first electrical voltage and being Lithium-ion;
said first electric accumulator (20) having a voltage greater than 200 volts;

9. Control method according to claim 8, **characterised in that** it comprises the step vi) of electrically connecting a charger (25) with said first accumulator (20) and said electrical distribution system (10).

10. Control method according to claim 8 or 9, **characterised in that** it comprises the step vii) of electrically directly connecting a second accumulator (30) with said distribution system (10);
said second accumulator (30) having a second electrical voltage; said second electrical voltage being greater than said first electrical voltage.

11. Method according to any one of claims 8 to 10, **characterised in that** it comprises the further steps of:
viii) interposing a drivetrain assembly (3) between said motor member (2) and a rotor (4, 5) of a helicopter (1) adapted to provide the lift necessary to sustain the helicopter (1);
ix) operating a second electric machine (80) by means of said drivetrain assembly (3) and as an electric generator to convert mechanical power into electrical power; and
x) electrically connecting said second electric machine (80) with said drivetrain assembly (3), so as to supply electrical power to said electrical distribution system (10) and to said auxiliary load (9), in the event of failure of said first electric machine (11).
